# FASCICULE DE BREVET EUROPEEN

(11) **EP 2 462 715 B1**
(45) Date de publication et mention de la délivrance du brevet: **27.11.2019**
(21) Numéro de dépôt: 10752882.0
(22) Date de dépôt: 28.07.2010
(51) Int. Cl.: H04L 9/00, H04L 9/30

(54) **PROCÉDÉ DE RECHERCHE D'UNE ENTITÉ À L'AIDE D'UN DISPOSITIF VÉRIFICATEUR ET DISPOSITIFS ASSOCIÉS**
VERFAHREN ZUR SUCHE NACH EINER EINHEIT ANHAND EINER VERIFIZIERUNGSVORRICHTUNG UND ZUGEHÖRIGE VORRICHTUNGEN
METHOD FOR SEARCHING FOR AN ENTITY USING A VERIFIER DEVICE, AND RELATED DEVICES

(30) Priorité: 07.08.2009 FR 0955564
(43) Date de publication de la demande: 13.06.2012
(73) Titulaire: Idemia Identity & Security France, 92400 Courbevoie (FR)
(72) Inventeur: BRINGER, Julien, F-75015 Paris (FR); CHABANNE, Hervé, F-75015 Paris (FR)
(74) Mandataire: Plasseraud IP
(86) Numéro de dépôt international: PCT/FR2010/051594
(87) Numéro de publication internationale: WO 2011/015768

(56) Documents cités:
- FENG-WEN SUN ET AL: "User identification for convolutionally/turbo-coded systems and its applications", IEEE TRANSACTIONS ON COMMUNICATIONS, IEEE SERVICE CENTER, PISCATAWAY, NJ, US LNKD- DOI:10.1109/TCOMM.2003.809235, vol. 51, no. 11, 1 novembre 2003 (2003-11-01), pages 1796-1808, XP011103470, ISSN: 0090-6778
- YOSSEF STEINBERG ET AL: "Identification in the Presence of Side Information with Application to Watermarking", IEEE TRANSACTIONS ON INFORMATION THEORY, IEEE, US, vol. 47, no. 4, 1 mai 2001 (2001-05-01), XP011027962, ISSN: 0018-9448
- OOHAMA YASUTADA: "Converse coding theorem for the identification via multiple access channels", INFORMATION THEORY WORKSHOP, 2002. PROCEEDINGS OF THE 2002 IEEE 20-25 OCT. 2002, PISCATAWAY, NJ, USA,IEEE, 20 octobre 2002 (2002-10-20), pages 155-158, XP010620608, ISBN: 978-0-7803-7629-8
- UYEMATSU T ET AL: "A SIMPLE CONSTRUCTION OF CODES FOR IDENTIFICATION VIA CHANNELS UNDER AVERAGE ERROR CRITERION", IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E79-A, no. 9, 1 septembre 1996 (1996-09-01), pages 1440-1443, XP000679637, ISSN: 0916-8508
- RUDOLF AHLSWEDE ET AL: "Identification via Channels", IEEE TRANSACTIONS ON INFORMATION THEORY, IEEE, US, vol. 198901, 1 janvier 1989 (1989-01-01), pages 15-29, XP007913244, ISSN: 0018-9448 cité dans la demande
- AHLSWEDE ET AL: "General theory of information transfer: Updated", DISCRETE APPLIED MATHEMATICS, ELSEVIER SCIENCE, AMSTERDAM, NL LNKD- DOI:10.1016/J.DAM.2007.07.007, vol. 156, no. 9, 1 mai 2008 (2008-05-01), pages 1348-1388, XP022588061, ISSN: 0166-218X [extrait le 2008-04-04]

## Description

La présente invention concerne la recherche d'une entité appartenant à un ensemble d'entités.

On entend par entité, tout élément matériel et/ou logiciel, éventuellement associé à un dispositif, un système ou un individu. A titre d'exemples non limitatifs, on peut citer un marqueur d'identification sans fil, tel qu'une étiquette RFID (Radio Frequency IDentification), un badge d'accès, une carte à puce, un téléphone portable, un ordinateur connecté à un réseau, ou autre.

Pour rechercher une entité, il est connu d'utiliser un dispositif vérificateur. Ce dernier peut également prendre des formes diverses en fonction du type d'entités qu'il vise à rechercher. Il peut par exemple s'agir d'un lecteur d'identification sans fil, tel qu'un lecteur RFID, d'un capteur, d'un serveur, ou autre.

Le dispositif vérificateur et les entités communiquent entre eux par l'intermédiaire d'au moins un canal de communication prévu à cet effet, qui peut être filaire ou sans fil selon les besoins.

Selon une première méthode connue, la recherche d'une entité appartenant à un ensemble d'entités à l'aide d'un dispositif vérificateur est effectuée en transmettant sur le canal de communication depuis chaque entité un identifiant respectif, et en analysant au dispositif vérificateur les identifiants reçus pour conclure à la présence ou non de l'entité recherchée.

Selon une deuxième méthode connue, la recherche est effectuée en transmettant depuis le dispositif vérificateur l'identifiant de l'entité recherchée par l'intermédiaire du canal de communication, puis le cas échéant en recevant sur le canal de communication une réponse de l'entité ayant reconnu son identifiant dans cette transmission.

Cette deuxième méthode est plus économique que la première, car elle permet de limiter le nombre de messages échangés sur le canal de communication et le traitement nécessaire au dispositif vérificateur pour trouver l'entité recherchée.

Elle n'est cependant pas sans poser de problèmes.

En particulier, elle ne protège pas l'identité des entités. Cela peut être particulièrement gênant lorsque les entités se rapportent à des individus, le respect de la vie privée de ces derniers n'étant alors pas assuré. C'est également gênant lorsque les entités se rapportent à du matériel ayant une valeur marchande et/ou financière, dont on souhaite empêcher la traçabilité par des tiers.

En effet, un attaquant à l'écoute du canal de communication peut intercepter l'identifiant transmis par le dispositif vérificateur et découvrir, en détectant la réponse envoyée, à quelle entité cet identifiant appartient.

Le document FENG-WEN SUN ET AL. « User identification for convolutionally / turbo-coded systems and its applications » (IEEE transactions on communications, IEEE service center, piscataway, NJ, US LNKD-DOI :10.1109/TCOMM.2003.809235, vol. 51, no. 11, 1er novembre 2003, pages 1796-1808) divulgue une méthode d'identification d'utilisateur pour des systèmes à code convolutif. L'algorithme proposé prévoit, au niveau d'un émetteur, de transmettre un code de canal C auquel est ajoutée une séquence filigrane (« watermark » en anglais) St. La séquence filigrane comprend une répétition d'un vecteur Wt, où t représente une identité d'utilisateur émetteur (voir page 1799, colonne de gauche). Au niveau de la réception, le récepteur ajoute au signal bruité reçu sa propre séquence filigrane Sr. Lorsque les deux séquences filigranes St et Sr correspondent, le taux d'erreur résultant est normal. A l'inverse, en cas d'absence de concordance, le taux d'erreur lié au bruit additionnel généré est anormalement élevé. Cette différence de comportement permet de donner une conclusion sur l'identité.

Le document YOSSEF STEINBERG ET AL. « Identification in the Presnece of Side Information with Application to Watermarking » (IEEE transactions on information theory, IEEE, US, vol.47, no. 4, 1 mai 2001, alinéa [0III]) concerne l'identification en présence d'informations secondaires et son application au tatouage numérique (« Watermarking »).

Le document OOHAMA YASUTADA « Converse coding theorem for the identification via multiple access channels » (Information theory workshop, 2002. Proceedings of the 2002 IEEE 20-25 oct. 2002, PISCATAWAY, NJ, USA, IEEE, 20 octobre 2002, pages 155-158, document en entier) vise un problème d'identification par l'intermédiaire d'une pluralité de canaux d'accès.

Le document UYEMATSU T ET AL. « a simple construction of codes for identification via channels under average error criterion » (IEICE transactions on fundamentals of electronics, communications and computer sciences, engineering sciences society, Tokyo, JP, vol. E79-A, no. 9, 1er septembre 1996, pages 1440-1443) concerne la construction de code d'identification par l'intermédiaire de canaux soumis à des erreurs.

Le document AHLSWEDE ET AL. « General theory of information transfer : Updated » (discrète applied mathematics, elsevier sciences, Amstrerdam, NL, vol. 156, no. 9, 1er mai 2008, pages 1348-1388) est relatif à la théorie générale du transfert d'information.

Un but de la présente invention est de permettre une recherche d'entité améliorant la protection de son identité. L'invention est définie par les revendications indépendantes 1 et 13-15.

L'invention propose ainsi un procédé de recherche d'une entité appartenant à un ensemble d'entités à l'aide d'un dispositif vérificateur, le dispositif vérificateur et les entités dudit ensemble d'entités étant agencés pour échanger des informations par l'intermédiaire d'au moins un canal de communication, chaque entité dudit ensemble d'entités possédant un premier identifiant respectif à partir duquel une pluralité de représentants peuvent être obtenus. Ce procédé comprend les étapes suivantes :
- obtenir au dispositif vérificateur un premier mot d'identification relatif à une entité recherchée, le premier mot d'identification étant formé par application au premier identifiant de l'entité recherchée d'une première fonction de codage de façon à dépendre d'une sous-partie de la pluralité de représentants pouvant être obtenus à partir dudit premier identifiant, ladite sous-partie étant déterminée par au moins un paramètre variable ; et
- transmettre, depuis le dispositif vérificateur, le premier mot d'identification obtenu sur le canal de communication.

L'utilisation d'une fonction de codage capable de générer un premier mot d'identification dépendant d'une partie seulement des représentants permet d'améliorer considérablement la protection de l'identité des entités par rapport à l'art antérieur mentionné en introduction.

Selon des modes de réalisation avantageux pouvant être combinés de toutes les manières envisageables :
- le procédé comprend en outre les étapes suivantes, mises en œuvre par chaque entité dudit ensemble d'entités à l'écoute du canal de communication :
   o recevoir un mot d'identification correspondant au premier mot d'identification transmis sur le canal de communication ; et
   o appliquer une première fonction d'identification associée à la première fonction de codage au mot d'identification reçu et à une information connue par ladite entité parmi le premier identifiant de ladite entité et au moins un représentant de la pluralité de représentants pouvant être obtenus à partir dudit premier identifiant, de façon à vérifier si ladite entité correspond à l'entité recherchée ; et/ou
- une indication de la valeur du paramètre variable utilisée pour former le premier mot d'identification obtenu est transmise depuis le dispositif vérificateur sur le canal de communication, et pour chaque entité dudit ensemble d'entités à l'écoute du canal de communication, ladite application de la première fonction d'identification tient compte de l'indication de la valeur du paramètre variable reçue ; et/ou
- lorsque le résultat de ladite application de la première fonction d'identification révèle que ladite entité correspond à l'entité recherchée, ladite entité envoie une réponse au dispositif vérificateur par l'intermédiaire du canal de communication ; et/ou
- ladite entité possède un deuxième identifiant à partir duquel une pluralité de représentants peuvent être obtenus, on obtient à ladite entité un deuxième mot d'identification par application d'une deuxième fonction de codage à une information connue par ladite entité parmi le deuxième identifiant de ladite entité et au moins un représentant de la pluralité de représentants pouvant être obtenus à partir dudit deuxième identifiant de façon à dépendre d'une sous-partie de la pluralité de représentants pouvant être obtenus à partir dudit deuxième identifiant, ladite sous-partie étant déterminée par au moins un paramètre variable, la réponse envoyée par ladite entité au dispositif vérificateur par l'intermédiaire du canal de communication inclut le deuxième mot d'identification ; et/ou
- on reçoit au dispositif vérificateur un mot d'identification correspondant au deuxième mot d'identification inclus dans ladite réponse, le dispositif vérificateur applique une deuxième fonction d'identification associée à la deuxième fonction de codage au mot d'identification reçu au dispositif vérificateur et à une information connue par le dispositif vérificateur parmi le deuxième identifiant de ladite entité et au moins un représentant de la pluralité de représentants pouvant être obtenus à partir dudit deuxième identifiant, de façon à effectuer une vérification complémentaire d'une correspondance entre ladite entité et l'entité recherchée ; et/ou
- la première fonction de codage est agencée pour que, lorsqu'elle est appliquée au premier identifiant de l'entité recherchée, ledit paramètre variable sélectionne au moins un représentant de la pluralité de représentants pouvant être obtenus à partir dudit premier identifiant, ladite application de la première fonction d'identification comprend une comparaison entre ledit représentant sélectionné par ledit paramètre variable et au moins un représentant de la pluralité de représentants pouvant être obtenus à partir du premier identifiant de ladite entité ; et/ou
- la valeur du paramètre variable utilisée pour former le premier mot d'identification obtenu est choisie de façon aléatoire ou quasi aléatoire ; et/ou
- le premier mot d'identification obtenu est transmis sur le canal de communication depuis le dispositif vérificateur de façon codée à l'aide d'un code correcteur d'erreurs ; et/ou
- le canal de communication est un canal sans-fil, tel qu'un canal radio, et le dispositif vérificateur comprend un lecteur d'identification sans fil et certaines au moins des entités de l'ensemble d'entités comprennent des marqueurs d'identification sans fil ; et/ou
- la faculté d'obtenir la pluralité de représentants pouvant être obtenus à partir d'un identifiant n'est donnée qu'à l'entité dudit ensemble d'entités possédant ledit identifiant et au dispositif vérificateur ; et/ou
- la première fonction de codage est agencée pour qu'un même premier mot d'identification puisse être le résultat de l'application de la première fonction de codage à plusieurs identifiants distincts parmi l'ensemble de tous les identifiants possibles.

L'invention propose en outre un dispositif vérificateur agencé pour échanger des informations avec un ensemble d'entités par l'intermédiaire d'au moins un canal de communication, chaque entité dudit ensemble d'entités possédant un premier identifiant respectif à partir duquel une pluralité de représentants peuvent être obtenus. Ce dispositif vérificateur comprend :
- une unité d'obtention d'un premier mot d'identification relatif à une entité recherchée, le premier mot d'identification étant formé par application au premier identifiant de l'entité recherchée d'une première fonction de codage de façon à dépendre d'une sous-partie de la pluralité de représentants pouvant être obtenus à partir dudit premier identifiant, ladite sous-partie étant déterminée par au moins un paramètre variable ; et
- une unité de transmission sur le canal de communication du premier mot d'identification obtenu par ladite unité d'obtention.

L'invention propose aussi une entité appartenant à un ensemble d'entités capables d'échanger des informations avec un dispositif vérificateur par l'intermédiaire d'au moins un canal de communication et possédant chacune un premier identifiant respectif à partir duquel une pluralité de représentants peuvent être obtenus. Ladite entité comprend :
- une unité de réception d'un mot d'identification correspondant à un premier mot d'identification transmis sur le canal de communication par le dispositif vérificateur, le premier mot d'identification étant formé par application au premier identifiant de l'entité recherchée d'une première fonction de codage de façon à dépendre d'une sous-partie de la pluralité de représentants pouvant être obtenus à partir dudit premier identifiant, ladite sous-partie étant déterminée par au moins un paramètre variable ; et
- une unité d'application d'une première fonction d'identification associée à la première fonction de codage au mot d'identification reçu et au premier identifiant de ladite entité et à une information connue par ladite entité parmi le premier identifiant de ladite entité et au moins un représentant de la pluralité de représentants pouvant être obtenus à partir dudit premier identifiant, de façon à vérifier si ladite entité correspond à l'entité recherchée.

L'invention propose encore un système de recherche d'une entité appartenant à un ensemble d'entités à l'aide d'un dispositif vérificateur, le système comprenant des moyens adaptés pour la mise en œuvre du procédé mentionné plus haut.

D'autres particularités et avantages de la présente invention apparaîtront dans la description ci-après d'exemples de réalisation non limitatifs, en référence aux dessins annexés, dans lesquels :
- la figure 1 est un schéma d'architecture pour un exemple de système capable de mettre en œuvre l'invention ;
- les figures 2 à 4 sont des schémas montrant des exemples non-limitatifs de réalisation de l'invention.

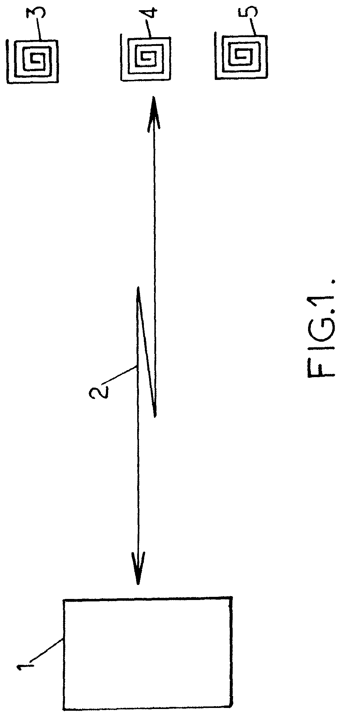

La figure 1 montre un dispositif vérificateur 1 et un ensemble d'entités agencés pour échanger des informations par l'intermédiaire d'un canal de communication 2. Les entités 3-5 représentées peuvent constituer à elles seules l'ensemble des entités existantes. En variante, elles peuvent ne correspondre qu'aux entités capables de communiquer par l'intermédiaire du canal de communication à un instant donné. D'autres entités peuvent alors éventuellement s'y ajouter ou les remplacer à d'autres instants d'observation.

Comme indiqué en introduction, chaque entité 3-5 peut consister en tout élément matériel et/ou logiciel, éventuellement associé à un dispositif, un système ou un individu. Dans l'exemple de la figure 1, les entités 3-5 ont été représentées comme étant des marqueurs d'identification sans fil, tels que des étiquettes RFID (Radio Frequency IDentification). En variante, il pourrait s'agir de badges d'accès, de cartes à puce, de téléphones portables, d'ordinateurs connectés à un réseau, ou autres. Les entités 3-5 peuvent en outre ne pas toutes être de la même nature. A titre d'illustration, elles pourraient se rapporter à un téléphone portable pour la première, à une étiquette RFID associée à une marchandise pour la deuxième, et à un ordinateur pour la troisième.

Le dispositif vérificateur 1 peut lui aussi prendre des formes diverses en fonction du type d'entités qu'il vise à rechercher, comme également rappelé en introduction. Il peut par exemple s'agir d'un lecteur d'identification sans fil, tel qu'un lecteur RFID comme illustré sur la figure 1, d'un capteur, d'un serveur, ou autre.

Le canal de communication 2, quant à lui, est adapté à l'échange d'informations entre le dispositif vérificateur 1 et les entités 3-5. Selon les besoins, il peut être filaire ou bien sans-fil. Dans l'exemple de la figure 1, le canal de communication 2 est un canal radio puisque le dispositif vérificateur 1 est un lecteur RFID et que tout ou partie des entités 3-5 sont des étiquettes RFID. Lorsque des entités de nature différente doivent pouvoir communiquer avec le dispositif vérificateur, plusieurs canaux de communication peuvent être utilisés. Par exemple, un canal de communication filaire et un canal de communication sans-fil peuvent être utilisés en relation avec des entités filaires et sans-fil respectivement.

De plus, le canal de communication 2 peut être simple, c'est-à-dire qu'il offre une communication directe entre le dispositif vérificateur 1 et les entités 3-5, par exemple via une fréquence radio donnée. En alternative, ce canal de communication 2 peut être plus élaboré. Il peut par exemple consister en un ensemble de ressources de communications d'un réseau de communication, comme un réseau informatique, un réseau de télécommunication ou autre.

Selon l'invention, on recherche une entité appartenant à l'ensemble des entités mentionné plus haut, par exemple l'entité 4, à l'aide du dispositif vérificateur 1. Autrement dit, on cherche à savoir, à l'aide du dispositif vérificateur 1, si l'entité 4 est à l'écoute du canal de communication 2. Lorsque le canal de communication 2 est un canal de faible portée, cela revient à chercher si l'entité 4 est à proximité du dispositif vérificateur 1.

On comprendra que la nature du dispositif vérificateur 1, des entités 3-5 et du canal de communication 2 sera adaptée à l'application visée. Ainsi, si l'on souhaite pouvoir contrôler la présence d'individus à l'intérieur de sites sensibles ou bien l'accès d'un faible nombre d'individus à des sites sensibles, on peut par exemple utiliser des badges d'accès équipés de puces RFID associés à des individus comme entités, un lecteur RFID comme dispositif vérificateur, et un canal radio utilisant des fréquences adaptées à la technologie RFID comme canal de communication. En variante, si l'on souhaite conditionner la mise en œuvre d'une application informatique en ligne à un contrôle d'identité, le canal de communication peut alors consister en des ressources de communication d'un réseau informatique, les entités utilisées peuvent comprendre des ordinateurs connectés à ce réseau, et le dispositif vérificateur est par exemple un serveur connecté à ce réseau.

Bien sûr, bien d'autres exemples d'application peuvent être envisagés selon les principes de l'invention, comme cela apparaîtra à l'homme du métier.

Chacune des entités 3-5 possède un identifiant respectif, au sens où il existe une association entre cette entité et l'identifiant respectif. Une pluralité de représentants peuvent être obtenus à partir d'un tel identifiant. Par exemple, un identifiant m relatif à une entité peut être directement composé d'une pluralité de représentants mₖ, avec k allant de 1 à un entier n, c'est-à-dire que m=(m₁,m₂,...,mₙ). Dans ce cas, chaque représentant mₖ peut être obtenu à partir de l'identifiant m par une simple sélection au sein de m. De façon plus générale, la pluralité de représentants mₖ peuvent être obtenus à partir de l'identifiant m correspondant à l'aide d'une ou plusieurs fonctions de génération fₖ prévues à cet effet. Ceci peut par exemple s'exprimer comme suit : mₖ=fₖ(m). On peut aussi prévoir qu'une même fonction de génération f permette de déduire tous les représentants mₖ à partir de l'identifiant m, par exemple par un processus itératif, en obtenant successivement les différents représentants à partir d'un ou plusieurs représentants déjà obtenus.

Un identifiant est par exemple une chaîne de valeurs, par exemple des éléments binaires, des octets ou autres. Dans le cas où m=(m₁,m₂,...,mₙ), chaque représentant mₖ peut par exemple constituer ou une plusieurs valeurs successives de m. D'autres constructions sont bien sûr possibles, comme cela apparaîtra à l'homme du métier.

Chaque identifiant est de préférence unique, pour éviter une ambigüité entre des entités ainsi identifiées. En revanche, certains identifiants peuvent éventuellement avoir des représentants communs.

Les identifiants peuvent être formés selon un modèle donné. A titre d'exemple, les identifiants peuvent être formés comme des chaînes de n éléments binaires, ce qui permet d'avoir 2ⁿ identifiants au total. On peut ainsi obtenir un nombre d'identifiants possibles plus élevé que le nombre d'entités réellement en jeu.

Chacune des entités 3-5 est capable de connaître son identifiant, ou bien la pluralité de représentants pouvant être obtenus à partir de son identifiant. Cette connaissance peut provenir de ce que l'identifiant et/ou les représentants correspondants sont stockés dans une mémoire de l'entité concernée. En variante, elle peut être acquise par consultation d'une mémoire externe, par réception de ces informations à partir d'une mémoire externe, ou autre.

Le dispositif vérificateur 1, quant à lui, est capable de connaître l'identifiant et/ou la pluralité de représentants pouvant être obtenus à partir de l'identifiant de chacune des entités de l'ensemble des entités. Là encore, cette connaissance peut provenir d'un stockage dans une mémoire du dispositif vérificateur 1, d'une consultation d'une mémoire externe, d'une réception de ces informations à partir d'une mémoire externe, ou autre.

Avantageusement, la faculté d'obtenir la pluralité de représentants pouvant être obtenus à partir d'un identifiant n'est donnée qu'à l'entité possédant cet identifiant et au dispositif vérificateur. Ceci peut être réalisé de plusieurs façons.

Par exemple, l'identifiant en question peut être stocké dans des mémoires protégées qui ne sont accessibles qu'à l'entité possédant cet identifiant d'une part et au dispositif vérificateur d'autre part. L'identifiant n'est jamais transmis sur le canal de communication. L'identifiant de ladite entité n'étant pas connu des tiers, ces derniers sont dans l'incapacité d'obtenir ses représentants.

En variante ou en complément, les représentants de l'identifiant en question peuvent être stockés dans des mémoires protégées qui ne sont accessibles qu'à l'entité possédant cet identifiant d'une part et au dispositif vérificateur d'autre part. Ils ne sont pas tous transmis simultanément sur le canal de communication. Les tiers ne peuvent donc pas connaître les représentants relatifs à ladite entité.

On peut aussi prévoir que l'identifiant en question soit une donnée publique, mais que la fonction de génération permettant d'obtenir les représentants correspondants soit secrète. De cette façon, on évite qu'un tiers disposant de l'identifiant puisse en déduire les représentants correspondants.

La recherche d'une entité selon l'invention met en œuvre la notion de code d'identification. Un exemple de cette notion de code d'identification est notamment décrit dans l'article de Rudolf Ahlswede et Gunter Dueck intitulé « Identification via Channels », IEEE transactions in information theory, Vol.35, No. 1, publié en janvier 1989.

De façon générale, un mot c d'un tel code d'identification, ci-après appelé un mot d'identification, est calculé par application d'une fonction de codage à un identifiant m à partir duquel une pluralité de représentants mₖ, avec k allant de 1 à un entier n, peuvent être obtenus. La fonction de codage fc est choisie pour que le mot d'identification obtenu dépende d'une sous-partie de la pluralité de représentants mₖ. Autrement dit, le mot d'identification peut dépendre d'un ou plusieurs représentants mₖ de m, mais pas de tous les représentants m₁,m₂,...,mₙ. La sous-partie de la pluralité de représentants mₖ dont dépend le mot d'identification est déterminée par au moins un paramètre variable.

Une fonction d'identification fi est associée à la fonction de codage fc utilisée pour calculer le mot d'identification c à partir de l'identifiant m.

Les propriétés du code d'identification sont par exemple telles que :
- si y1 est un mot obtenu par application de la fonction de codage fc à l'identifiant m, l'application de la fonction d'identification fi à y1 et à m ou certains au moins de ses représentants conclut à tort à une absence de correspondance avec une probabilité inférieure à λ1 ; et
- si y2 est un mot obtenu par application de la fonction de codage fc à l'identifiant m' distinct de m, l'application de la fonction d'identification fi à y2 et à m ou certains au moins de ses représentants conclut à tort à une correspondance avec une probabilité inférieure à λ2.

Plus λ1 et λ2 sont faibles, plus le code d'identification est fiable.

Avantageusement, la fonction de codage fc utilisée dans le cadre de la présente invention peut être en outre agencée pour qu'un même mot d'identification puisse être le résultat de l'application de cette fonction de codage fc à plusieurs identifiants distincts parmi l'ensemble de tous les identifiants possibles. A titre d'exemple non limitatif, si les identifiants consistent chacun en une série de représentants, certains représentants pouvant être communs entre au moins deux identifiants distincts, une fonction de codage fc consistant à sélectionner un représentant de rang donné dans une série de représentants pourra parfois retourner une même valeur en étant appliquée à deux identifiants distincts.

Un exemple spécifique et intéressant de code d'identification pouvant être utilisé dans le cadre de la présente invention est celui qui est décrit dans l'article de Pierre Moulin et Ralf Koetter intitulé « A framework for the Design of Good Watermark Identification Codes », Security, Steganography, and Watermarking of Multimedia Contents VIII, San Jose, California ; p. 565-574; ISBN / ISSN: 0-8194-6112-1, publié en janvier 2006. Tout autre code d'identification peut bien sûr être mis en œuvre en remplacement ou en complément de celui-ci.

La recherche d'une entité selon l'invention se fait en obtenant dans une unité d'obtention du dispositif vérificateur 1, un mot d'identification c relatif à l'entité recherchée. Cette obtention peut être effectuée par un calcul selon les principes exposés ci-dessus, réalisé au dispositif vérificateur, dans un dispositif distinct transmettant le mot d'identification calculé au dispositif vérificateur, ou bien de façon partagée entre ces deux dispositifs. En variante, cette obtention peut être réalisée en retrouvant le mot d'identification c relatif à l'entité recherchée, par exemple dans une mémoire du dispositif vérificateur 1.

Une fois le mot d'identification c obtenu au dispositif vérificateur 1, une unité de transmission de ce dernier le transmet sur le canal de communication 2. Le canal de communication 2 étant commun à toutes les entités, le mot d'identification transmis peut être reçu par toute entité 3-5 à l'écoute de ce canal.

Chaque entité 3-5 ayant reçu, à l'aide d'une unité de réception appropriée, un mot d'identification correspondant au mot d'identification transmis (éventuellement à des erreurs de transmission près, lorsque le canal de communication 2 introduit des erreurs, par exemple parce qu'il est bruité), peut alors avantageusement appliquer, à l'aide d'une unité d'application appropriée, la fonction d'identification fi associée à la fonction de codage fc au mot d'identification reçu et à une information qu'elle connaît parmi son identifiant et au moins un représentant de la pluralité de représentants pouvant être obtenus à partir de son identifiant, de façon à vérifier si ladite entité correspond à l'entité recherchée.

Pour renforcer la fiabilité de la vérification effectuée par chaque entité 3-5, le mot d'identification obtenu par le dispositif vérificateur 1 est avantageusement transmis avec un code de transmission qui est un code correcteur d'erreurs. Tout code correcteur d'erreurs connu peut être utilisé à cet effet. Chaque entité 3-5 dispose alors avantageusement de la fonction de décodage associée qui lui permet de retrouver le mot d'identification transmis par le dispositif vérificateur 1, exempt d'erreur ou du moins avec une quantité d'erreur limitée.

On privilégiera un code correcteur d'erreurs adapté à la nature des entités 3-5, du dispositif vérificateur 1 et du canal de communication 2. A titre d'exemple, si les échanges d'informations ont lieu sur un canal de communication 2 sans-fil et très bruité, un code correcteur d'erreurs robuste, avec par exemple une forte redondance sera favorisé.

Le mode de construction des identifiants et de leurs représentants peut également être pris en compte dans le choix du code correcteur d'erreurs utilisé. Par exemple, si au moins une des probabilités λ1 et λ2 mentionnées plus haut est élevée, on peut vouloir privilégier un code correcteur d'erreurs capable de corriger une quantité importante d'erreurs pour ne pas aggraver les faibles performances de l'identification.

Des exemples de réalisation non limitatifs vont désormais être décrits pour illustrer le type de vérification possible selon l'invention. Dans tous ces exemples, on reprend l'architecture de la figure 1, et on suppose que l'on recherche l'entité 4 à l'aide du dispositif vérificateur 1.

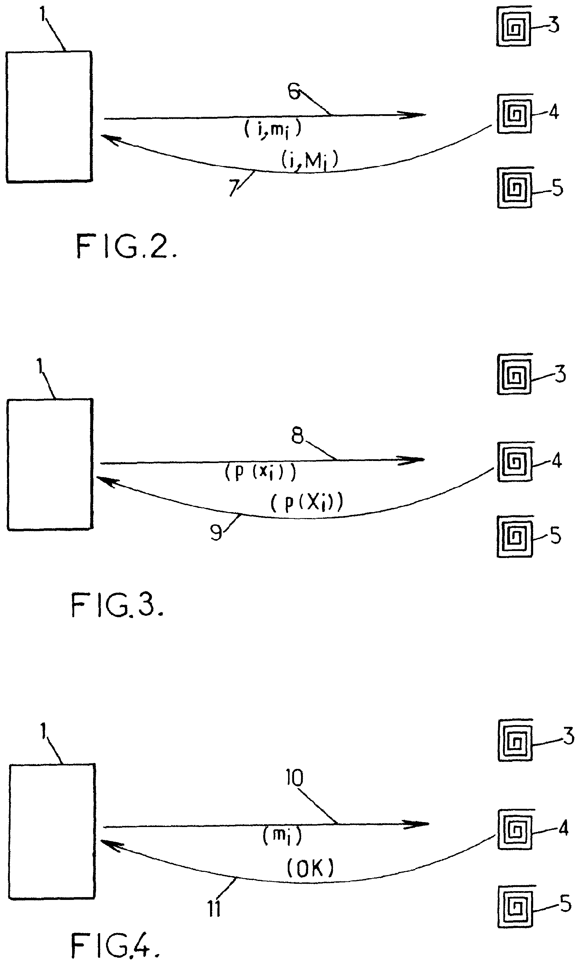

Dans l'exemple illustré sur la figure 2, les identifiants des entités sont des chaînes de valeurs consistant en des séries de représentants. En particulier, l'entité 4 a pour identifiant m=(m₁,m₂,...,mₙ), dont m₁,m₂,...,mₙ sont les représentants.

Dans un premier temps, le dispositif vérificateur 1 choisit un nombre i entre 1 et n. Le choix de i peut se faire de façon aléatoire ou quasi aléatoire. Puis, le dispositif vérificateur 1 sélectionne le représentant mᵢ de m de rang i dans la chaîne m=(m₁,m₂,...,mₙ). C'est ce représentant mᵢ qui constitue alors le mot d'identification c dans ce cas.

Dans cet exemple, le choix du représentant par son rang dans l'identifiant m est un paramètre variable qui détermine la sous-partie de la pluralité de représentants pouvant être obtenus à partir de l'identifiant m, en l'occurrence un seul des n représentants.

En variante, plusieurs indices au lieu du seul indice i pourraient être choisis pour sélectionner plus d'un représentant. Par exemple, le tirage éventuellement aléatoire des nombres (i,j) entre 1 et n pourrait permettre d'obtenir un mot d'identification c du type (mᵢ,mⱼ) ou encore toute combinaison entre mᵢ et mⱼ, comme par exemple mᵢ + mⱼ.

A l'étape 6 de la figure 2, le dispositif vérificateur 1 transmet le mot d'identification mᵢ obtenu sur le canal de communication 2. Avantageusement, le dispositif vérificateur 1 transmet également sur le canal de communication 2 le nombre i ayant servi à sélectionner le représentant mᵢ, ou toute autre indication de la valeur de i. Ces deux informations peuvent être transmises dans un même message ou bien dans deux messages distincts.

Par la suite, chacune des entités 3-5 à l'écoute du canal de communication 2 ayant reçu un mot d'identification correspondant au mot d'identification mᵢ transmis par le dispositif vérificateur 1 peut vérifier si elle est l'entité recherchée.

En particulier, l'entité 4 reçoit un mot d'identification m̃ᵢ qui correspond à mᵢ, éventuellement à quelques erreurs de transmission près. Elle reçoit aussi avantageusement le nombre i qui correspond à i, éventuellement à quelques erreurs de transmission près.

La fonction de codage fc mise en œuvre par le dispositif vérificateur 1 consistait à sélectionner un représentant parmi la pluralité de représentants m₁,m₂,...,mₙ de l'entité 4. La fonction d'identification fi associée à cette fonction de codage et mise en œuvre par l'entité 4 (ainsi que par chacune des autres entités à l'écoute du canal de communication 2) consiste, quant à elle, à retrouver le représentant de rang i au sein de l'identifiant m de l'entité 4, puis à le comparer au mot d'identification m̃ᵢ reçu.

En cas de concordance, l'entité 4 considère qu'elle est bien l'entité recherchée et envoie avantageusement une réponse 7 via le canal de communication 2 au dispositif vérificateur 1 pour l'en informer.

On notera que si le nombre i n'est pas transmis par le dispositif vérificateur 1, la vérification est toujours possible à l'entité 4, mais en comparant le mot d'identification m̃ᵢ à tout ou partie des représentants m₁,m₂,...,mₙ, plutôt qu'au seul représentant de rang i .

Dans l'exemple ci-dessus, on a considéré que l'entité 4 pouvait connaître son identifiant m, par exemple parce qu'elle le stockait en mémoire. Si seuls les représentants m₁,m₂,...,mₙ de m sont connus par l'entité, sans que leur ordre au sein de m le soit, on peut également procéder à une comparaison du mot d'identification m̃ᵢ reçu avec tout ou partie des représentants connus de l'entité 4.

Dans ces deux derniers cas, une concordance entre le mot d'identification m̃ᵢ reçu et l'un quelconque des représentants connus ou obtenus à partir de m par l'entité 4 peut suffire à conclure que l'entité 4 est bien l'entité recherchée.

Dans le cas où l'entité 4 envoie une réponse 7 au dispositif vérificateur 1 par l'intermédiaire du canal de communication 2, cette réponse peut simplement signifier que l'entité 4 se considère comme correspondant à l'entité recherchée. A l'inverse, si les entités 3 et 5 ne se considèrent pas comme correspondant à l'entité recherchée, elles n'envoient pas de réponse au dispositif vérificateur 1. Ce dernier est alors capable de conclure que l'entité 4 est bien celle qu'il recherche.

La fonction de codage étant probabiliste, et non déterministe, il est possible que plusieurs entités se considèrent comme étant l'entité recherchée. Dans ce cas, le dispositif vérificateur 1 peut recevoir plusieurs réponses 7 à sa requête 6 depuis plusieurs entités par l'intermédiaire du canal de communication 2. Il pourra alors avantageusement affiner sa recherche pour identifier l'entité recherchée. A titre d'exemple, il pourra réinterroger les entités 3-5 en choisissant et en transmettant un couple (j,mⱼ) distinct de (i,mᵢ). Avantageusement, le couple (j,mⱼ) transmis sera choisi pour éviter une nouvelle ambigüité entre les entités qui ont envoyé des réponses 7, c'est-à-dire de façon qu'une seule de ces entités se considère comme correspondant à l'entité recherchée.

Dans l'exemple illustré sur de la figure 2, la réponse 7 envoyée par l'entité 4 par l'intermédiaire du canal de communication 2 contient de l'information basée sur le même principe que la requête 6.

A cet effet, en plus de m, l'entité 4 connaît, de par un stockage dans sa mémoire par exemple, un deuxième identifiant M=(M₁,M₂, .... Mₙ) ou bien tout ou partie de ses représentants M₁,M₂, .... Mₙ sans considération d'ordre. Elle dispose en outre d'une deuxième fonction de codage Fc qui peut être différente ou identique à fc. L'entité 4 est alors capable d'obtenir un deuxième mot d'identification par application de la deuxième fonction de codage Fc à l'information qu'elle connaît parmi M et au moins un des représentants M₁,M₂,...,Mₙ.

Dans l'exemple de la figure 2, la deuxième fonction de codage Fc est la même que fc et son paramètre variable est fixé à la même valeur que celle choisie par le dispositif vérificateur 1, c'est-à-dire i. Ainsi, la réponse 7 envoyée par l'entité 4 inclut le deuxième mot d'identification Mᵢ. Le nombre i peut éventuellement être transmis en plus de Mᵢ si le dispositif vérificateur 1 ignore que la deuxième fonction de codage Fc utilise la même valeur de paramètre variable que fc.

Il est possible que le deuxième identifiant M soit en fait le même que le premier identifiant m. Dans ce cas, la réponse 7 inclura de préférence un couple (j,mⱼ) distinct de (i,mᵢ).

Le fait d'inclure ainsi de l'information supplémentaire dans la réponse 7 peut permettre au dispositif vérificateur 1 d'effectuer une vérification complémentaire d'identité. On notera que ce mode de fonctionnement n'est pas limité au type d'identifiant décrit en référence à la figure 2, mais pourrait s'appliquer quel que soit le format d'identifiant utilisé.

Pour effectuer une telle vérification complémentaire d'identité, le dispositif vérificateur 1 dispose avantageusement d'une deuxième fonction d'identification Fi associée à la deuxième fonction de codage Fc. Comme cela a été décrit en relation avec l'entité 4, le dispositif vérificateur 1 applique la deuxième fonction d'identification Fi au mot d'identification M̃ᵢ reçu au dispositif vérificateur 1 et à une information connue par le dispositif vérificateur 1 parmi l'identifiant M de l'entité 4 et au moins un de ses représentants M₁,M₂, .... Mₙ.

Cette vérification complémentaire permet de confirmer ou au contraire d'infirmer que l'entité 4 est l'entité recherchée. Cette option est intéressante car elle limite les erreurs d'identification susceptibles de survenir dans le modèle probabiliste de l'invention.

Par rapport aux méthodes de l'art antérieur mentionnées en introduction, l'exemple qui vient d'être décrit permet de comprendre que l'invention peut autoriser une recherche d'entité améliorant la protection de son identité.

En effet, un attaquant à l'écoute du canal de communication 2 et n'ayant pas une connaissance a priori des identifiants des entités et de leurs représentants ne sera en général pas capable de retrouver l'identifiant m de l'entité 4 à partir des représentants transmis mᵢ et Mᵢ.

La tâche de l'attaquant à l'écoute du canal de communication 2 est rendue particulièrement difficile, du fait que le codage réalisé est probabiliste, et non déterministe, car il dépend d'au moins un paramètre variable. De ce fait, des mots d'identification différents peuvent permettre d'identifier une même entité.

En outre, le nombre total de mots d'identification possibles est bien plus élevé que le nombre total d'identifiants. Il est donc quasi impossible pour un attaquant de découvrir tous les mots d'identification se rapportant à une entité donnée en écoutant le canal de communication 2 pendant un temps limité.

Et même si l'attaquant était capable de connaître les identifiants de certaines entités et/ou leurs représentants, il ne serait pas forcément en mesure de conclure avec certitude quant à l'identité de l'entité ayant envoyé une réponse, notamment dans le cas où la fonction de codage est susceptible de conduire à un même mot d'identification lorsqu'elle est appliquée à plusieurs identifiants distincts.

Ainsi, l'invention peut notamment permettre d'améliorer le respect de la vie privée d'individus et de rendre plus difficile la traçabilité de matériel.

Un autre avantage de l'invention réside dans son efficacité. Dans l'exemple décrit en référence à la figure 2, si l'on suppose que chaque représentant m₁,m₂,...,mₙ constituant l'identifiant m consiste en un octet, c'est-à-dire huit bits, la recherche peut ne nécessiter approximativement que la transmission d'un octet (transmission de mᵢ à l'étape 6). En comparaison, la transmission de l'intégralité de l'identifiant m=(m₁,m₂,...,mₙ) par le dispositif vérificateur, comme dans l'art antérieur, nécessite quant à elle n octets.

Les avantages ci-dessus ne sont pas limités à l'exemple décrit en référence à la figure 2 comme cela apparaîtra à l'homme du métier.

La figure 3 montre un autre exemple de réalisation de l'invention. Dans cet exemple, chacune des entités 3-5 possède un identifiant sous la forme d'un polynôme respectif. Les représentants pouvant être obtenus à partir d'un tel identifiant sont par exemple des évaluations de ce polynôme en différents points, ou des coefficients de ce polynôme.

Par exemple, l'identifiant relatif à l'entité 4 peut être le polynôme p(x) et les représentants correspondants peuvent être les évaluations de ce polynôme en un ensemble de points déterminés x₁,X₂,...,Xₙ avec n entier, soit p(x₁), p(x2),...,p(xn).

La fonction de codage fc utilisée par le dispositif vérificateur 1 dans ce cas peut par exemple consister à sélectionner aléatoirement une de ces évaluations, par exemple p(xᵢ). Ce mot d'identification p(xᵢ) est transmis depuis le dispositif vérificateur 1 sur le canal de communication 2 à l'étape 8.

A réception d'un mot d'identification correspondant, chacune des entités 3-5 à l'écoute du canal de communication 2 le compare à tout ou partie des évaluations qu'elle a par exemple elle-même en mémoire, pour déterminer une éventuelle adéquation.

En cas de concordance par exemple pour l'entité 4, cette dernière envoie une réponse 9 au dispositif vérificateur 1 par l'intermédiaire du canal de communication 2. Cette réponse peut par exemple inclure une évaluation p(Xᵢ) obtenue par application du polynôme p à un point Xᵢ distinct de x₁ᵢ,x₂,...,xₙ. En variante, la réponse 9 pourrait inclure une évaluation P(xᵢ), où P est un polynôme distinct de p. En variante encore, la réponse 9 pourrait inclure une évaluation p(xⱼ) avec j différent de i.

La figure 4 montre un autre exemple de réalisation, dans lequel chaque entité a pour identifiant un nombre, par exemple compris entre 1000 et 10000, et dans lequel les représentants pouvant être obtenus à partir de cet identifiant sont des vecteurs binaires de longueur fixe, par exemple 20000, et dont le poids est égal à l'identifiant correspondant. Ainsi, tous les représentants m₁,m₂,...,mₙ pouvant être obtenus à partir de l'identifiant N, avec N compris entre 1000 et 10000, ont par exemple un nombre de 1 égal à N et un nombre de 0 égal à 20000-N, ces représentants différant entre eux par la position des 0 et des 1. On comprendra que ces valeurs numériques sont données à titre illustratif uniquement et ne sauraient limiter la généralité du propos.

Le dispositif vérificateur 1 qui recherche l'entité 4 d'identifiant N choisit par exemple aléatoirement un représentant mᵢ de l'identifiant N, c'est-à-dire un vecteur binaire ayant N bits à 1 et 20000-N bits à 0. Puis il transmet le représentant mᵢ en tant que mot d'identification sur le canal de communication 2 à l'étape 10.

L'entité 4 connaît son identifiant N, par exemple parce qu'elle le stocke dans sa mémoire. A la réception d'un mot d'identification de longueur 20000 correspondant au représentant transmis mᵢ, l'entité 4 calcule son poids, c'est-à-dire son nombre de 1 et le compare à N. Il s'agit là d'une fonction d'identification appliquée au mot d'identification reçu et à l'identifiant N de l'entité 4.

En cas d'égalité, l'entité 4 considère qu'elle est l'entité recherchée et envoie une réponse 11 au dispositif vérificateur 1 par l'intermédiaire du canal de communication 2. Cette réponse peut être interprétée comme telle par le dispositif vérificateur 1. Dans cet exemple, la réponse 11 ne contient pas d'autre information utile.

L'homme du métier comprendra que les exemples décrits en référence aux figures 2 à 4 ne sont pas limitatifs. Beaucoup d'autres possibilités peuvent être envisagées selon les principes généraux de l'invention décrits plus haut. En particulier, des fonctions de codage et/ou d'identification différentes de celles qui ont été décrites peuvent être utilisées.

On notera que tout ou partie des opérations décrites en référence aux différentes figures peuvent être mises en œuvre en totalité ou en partie de façon logicielle, c'est-à-dire à l'aide d'un produit programme d'ordinateur comprenant des instructions de code adaptées à cet effet. En alternative ou en complément, certaines au moins de ces étapes peuvent être réalisées à l'aide d'un circuit électronique.

## Revendications

1. Procédé de recherche d'une entité appartenant à un ensemble d'entités à l'aide d'un dispositif vérificateur (1), le dispositif vérificateur et les entités dudit ensemble d'entités échangeant des informations par l'intermédiaire d'au moins un canal de communication (2), chaque entité dudit ensemble d'entités possédant un premier identifiant respectif à partir duquel une pluralité de représentants peuvent être obtenus, le procédé comprenant les étapes suivantes :
- obtenir au dispositif vérificateur un premier mot d'identification (mᵢ;p(xᵢ)) relatif à une entité recherchée (4), le premier mot d'identification étant formé par application au premier identifiant de l'entité recherchée d'une première fonction de codage de façon à dépendre d'une sous-partie de la pluralité de représentants pouvant être obtenus à partir dudit premier identifiant, ladite sous-partie étant déterminée par au moins un paramètre variable (i), le mot d'identification pouvant dépendre d'un ou plusieurs représentants mais pas de tous; et
- transmettre, depuis le dispositif vérificateur, le premier mot d'identification obtenu sur le canal de communication.

2. Procédé selon la revendication 1, comprenant en outre les étapes suivantes, mises en œuvre par chaque entité (3-5) dudit ensemble d'entités à l'écoute du canal de communication (2) :
- recevoir un mot d'identification correspondant au premier mot d'identification (mᵢ;p(xᵢ)) transmis sur le canal de communication ; et
- appliquer une première fonction d'identification associée à la première fonction de codage au mot d'identification reçu et à une information connue par ladite entité parmi le premier identifiant de ladite entité et au moins un représentant de la pluralité de représentants pouvant être obtenus à partir dudit premier identifiant, de façon à vérifier si ladite entité correspond à l'entité recherchée (4).

3. Procédé selon la revendication 2, dans lequel une indication de la valeur du paramètre variable (i) utilisée pour former le premier mot d'identification obtenu (mᵢ) est transmise depuis le dispositif vérificateur (1) sur le canal de communication (2), et dans lequel pour chaque entité (3-5) dudit ensemble d'entités à l'écoute du canal de communication, ladite application de la première fonction d'identification tient compte de l'indication de la valeur du paramètre variable reçue.

4. Procédé selon la revendication 2 ou 3, dans lequel, lorsque le résultat de ladite application de la première fonction d'identification révèle que ladite entité (3-5) correspond à l'entité recherchée (4), ladite entité envoie une réponse (7;9;11) au dispositif vérificateur (1) par l'intermédiaire du canal de communication (2).

5. Procédé selon la revendication 4, dans lequel ladite entité (3-5) possède un deuxième identifiant à partir duquel une pluralité de représentants peuvent être obtenus, dans lequel on obtient à ladite entité un deuxième mot d'identification (Mᵢ;p(Xᵢ)) par application d'une deuxième fonction de codage à une information connue par ladite entité parmi le deuxième identifiant de ladite entité et au moins un représentant de la pluralité de représentants pouvant être obtenus à partir dudit deuxième identifiant de façon à dépendre d'une sous-partie de la pluralité de représentants pouvant être obtenus à partir dudit deuxième identifiant, ladite sous-partie étant déterminée par au moins un paramètre variable (i), et dans lequel la réponse (7;9;11) envoyée par ladite entité au dispositif vérificateur (1) par l'intermédiaire du canal de communication (2) inclut le deuxième mot d'identification.

6. Procédé selon la revendication 5, dans lequel on reçoit au dispositif vérificateur (1) un mot d'identification correspondant au deuxième mot d'identification (Mᵢ;p(Xᵢ)) inclus dans ladite réponse (7;9;11), et dans lequel le dispositif vérificateur applique une deuxième fonction d'identification associée à la deuxième fonction de codage au mot d'identification reçu au dispositif vérificateur et à une information connue par le dispositif vérificateur parmi le deuxième identifiant de ladite entité (3-5) et au moins un représentant de la pluralité de représentants pouvant être obtenus à partir dudit deuxième identifiant, de façon à effectuer une vérification complémentaire d'une correspondance entre ladite entité et l'entité recherchée.

7. Procédé selon l'une quelconque des revendications 2 à 6, dans lequel la première fonction de codage est agencée pour que, lorsqu'elle est appliquée au premier identifiant de l'entité recherchée (4), ledit paramètre variable (i) sélectionne au moins un représentant (mᵢ) de la pluralité de représentants pouvant être obtenus à partir dudit premier identifiant, et dans lequel ladite application de la première fonction d'identification comprend une comparaison entre ledit représentant sélectionné par ledit paramètre variable et au moins un représentant de la pluralité de représentants pouvant être obtenus à partir du premier identifiant de ladite entité.

8. Procédé selon l'une quelconque des revendications précédentes, dans lequel la valeur du paramètre variable (i) utilisée pour former le premier mot d'identification (mᵢ) obtenu est choisie de façon aléatoire ou quasi aléatoire.

9. Procédé selon l'une quelconque des revendications précédentes, dans lequel le premier mot d'identification (mᵢ) obtenu est transmis sur le canal de communication (2) depuis le dispositif vérificateur (1) de façon codée à l'aide d'un code correcteur d'erreurs.

10. Procédé selon l'une quelconque des revendications précédentes, dans lequel le canal de communication (2) est un canal sans-fil, tel qu'un canal radio, et dans lequel le dispositif vérificateur (1) comprend un lecteur d'identification sans fil et certaines au moins des entités de l'ensemble d'entités (3-5) comprennent des marqueurs d'identification sans fil.

11. Procédé selon l'une quelconque des revendications précédentes, dans lequel la faculté d'obtenir la pluralité de représentants pouvant être obtenus à partir d'un identifiant n'est donnée qu'à l'entité (3-5) dudit ensemble d'entités possédant ledit identifiant et au dispositif vérificateur (1).

12. Procédé selon l'une quelconque des revendications précédentes, dans lequel la première fonction de codage est agencée pour qu'un même premier mot d'identification puisse être le résultat de l'application de la première fonction de codage à plusieurs identifiants distincts parmi l'ensemble de tous les identifiants possibles.

13. Dispositif vérificateur (1) agencé pour échanger des informations avec un ensemble d'entités par l'intermédiaire d'au moins un canal de communication (2), chaque entité dudit ensemble d'entités possédant un premier identifiant respectif à partir duquel une pluralité de représentants peuvent être obtenus, le dispositif vérificateur comprenant :
- une unité d'obtention d'un premier mot d'identification (mᵢ;p(xᵢ)) relatif à une entité recherchée (4), ladite unité d'obtention étant adaptée à former le premier mot d'identification par application au premier identifiant de l'entité recherchée d'une première fonction de codage de façon à dépendre d'une sous-partie de la pluralité de représentants pouvant être obtenus à partir dudit premier identifiant, ladite unité d'obtention étant adaptée à déterminer ladite sous-partie par au moins un paramètre variable (i), le mot d'identification pouvant dépendre d'un ou plusieurs représentants mais pas de tous; et
- une unité de transmission sur le canal de communication du premier mot d'identification obtenu par ladite unité d'obtention.

14. Entité (3-5) appartenant à un ensemble d'entités capables d'échanger des informations avec un dispositif vérificateur (1) par l'intermédiaire d'au moins un canal de communication (2) et possédant chacune un premier identifiant respectif à partir duquel une pluralité de représentants peuvent être obtenus, ladite entité comprenant :
- une unité de réception d'un mot d'identification correspondant à un premier mot d'identification (mᵢ;p(xᵢ)) transmis sur le canal de communication par le dispositif vérificateur, le premier mot d'identification ayant été formé par application au premier identifiant d' une entité recherchée (4) par le dispositif vérificateur d'une première fonction de codage de façon à dépendre d'une sous-partie de la pluralité de représentants pouvant être obtenus à partir dudit premier identifiant, ladite sous-partie ayant été déterminée par au moins un paramètre variable (i), le mot d'identification pouvant dépendre d'un ou plusieurs représentants mais pas de tous; et
- une unité d'application d'une première fonction d'identification associée à la première fonction de codage au mot d'identification reçu et au premier identifiant de ladite entité et à une information connue par ladite entité parmi le premier identifiant de ladite entité et au moins un représentant de la pluralité de représentants pouvant être obtenus à partir dudit premier identifiant, de façon à vérifier si ladite entité correspond à l'entité recherchée.

15. Système de recherche d'une entité (4) appartenant à un ensemble d'entités à l'aide d'un dispositif vérificateur (1), le système comprenant des moyens adaptés pour la mise en œuvre du procédé selon l'une quelconque des revendications 1 à 12.

## Patentansprüche

1. Verfahren zum Suchen einer Entität, die einer Menge von Entitäten angehört, mithilfe einer Verifizierungsvorrichtung (1), wobei die Verifizierungsvorrichtung und die Entitäten der Menge von Entitäten Informationen über mindestens einen Kommunikationskanal (2) austauschen, wobei jede Entität der Menge von Entitäten eine erste jeweilige Kennung besitzt, anhand der eine Vielzahl von Repräsentanten erhalten werden kann, wobei das Verfahren die folgenden Schritte umfasst:
- Erhalten eines ersten Identifikationswortes (mᵢ; p(xᵢ)) bezüglich einer gesuchten Entität (4) an der Verifizierungsvorrichtung, wobei das erste Identifikationswort durch Anwenden einer ersten Codierungsfunktion auf die erste Kennung der gesuchten Entität gebildet wird, so dass es von einem Teilbereich der Vielzahl von Repräsentanten abhängt, die anhand der ersten Kennung erhalten werden kann, wobei der Teilbereich durch mindestens einen variablen Parameter (i) bestimmt wird, wobei das Identifikationswort von einem oder mehreren Repräsentanten abhängen kann, aber nicht von allen; und
- Übertragen des erhaltenen ersten Identifikationswortes von der Verifizierungsvorrichtung aus über den Kommunikationskanal.

2. Verfahren nach Anspruch 1, umfassend ferner die folgenden Schritte, die von jeder Entität (3-5) der Menge von Entitäten ausgeführt werden, die den Kommunikationskanal (2) mithören:
- Empfangen eines Identifikationswortes, das dem über den Kommunikationskanal übertragenen ersten Identifikationswort (mᵢ; p(xᵢ)) entspricht; und
- Anwenden einer ersten Identifikationsfunktion, die der ersten Codierungsfunktion zugeordnet ist, auf das empfangene Identifikationswort und auf eine der Entität bekannte Information unter der ersten Kennung der Entität und mindestens einem Repräsentanten der Vielzahl von Repräsentanten, die anhand der ersten Kennung erhalten werden kann, um zu verifizieren, ob die Entität der gesuchten Entität (4) entspricht.

3. Verfahren nach Anspruch 2, bei dem eine Angabe des Werts des variablen Parameters (i), der zum Bilden des erhaltenen ersten Identifikationswortes (mᵢ) verwendet wird, von der Verifizierungsvorrichtung (1) aus über den Kommunikationskanal (2) übertragen wird und bei dem für jede Entität (3-5) der Menge von Entitäten, die den Kommunikationskanal mithören, die Anwendung der ersten Identifikationsfunktion die empfangene Angabe des Werts des variablen Parameters berücksichtigt.

4. Verfahren nach Anspruch 2 oder 3, bei dem, wenn das Ergebnis der Anwendung der ersten Identifikationsfunktion offenbart, dass die Entität (3-5) der gesuchten Entität (4) entspricht, die Entität eine Antwort (7; 9; 11) an die Verifizierungsvorrichtung (1) über den Kommunikationskanal (2) sendet.

5. Verfahren nach Anspruch 4, bei dem die Entität (3-5) eine zweite Kennung besitzt, anhand der eine Vielzahl von Repräsentanten erhalten werden kann, wobei man an der Entität ein zweites Identifikationswort (Mᵢ; p(Xᵢ)) durch Anwenden einer zweiten Codierungsfunktion auf eine der Entität bekannte Information unter der zweiten Kennung der Entität und mindestens einem Repräsentanten der Vielzahl von Repräsentanten, die anhand der zweiten Kennung erhalten werden kann, erhält, so dass es von einem Teilbereich der Vielzahl von Repräsentanten abhängt, die anhand der zweiten Kennung erhalten werden kann, wobei der Teilbereich durch mindestens einen variablen Parameter (i) bestimmt wird, und bei dem die von der Entität an die Verifizierungsvorrichtung (1) über den Kommunikationskanal (2) gesendete Antwort (7; 9; 11) das zweite Identifikationswort beinhaltet.

6. Verfahren nach Anspruch 5, bei dem man an der Verifizierungsvorrichtung (1) ein Identifikationswort empfängt, das dem in der Antwort (7; 9; 11) enthaltenen zweiten Identifikationswort (Mᵢ; p(Xᵢ)) entspricht, und bei dem die Verifizierungsvorrichtung eine zweite Identifikationsfunktion, die der zweiten Codierungsfunktion zugeordnet ist, auf das an der Verifizierungsvorrichtung empfangene Identifikationswort und auf eine der Verifizierungsvorrichtung bekannte Information unter der zweiten Kennung der Entität (3-5) und mindestens einem Repräsentanten der Vielzahl von Repräsentanten, die anhand der zweiten Kennung erhalten werden kann, anwendet, um eine ergänzende Verifizierung einer Übereinstimmung zwischen der Entität und der gesuchten Entität vorzunehmen.

7. Verfahren nach einem der Ansprüche 2 bis 6, bei dem die erste Codierungsfunktion dazu eingerichtet ist, dass, wenn sie auf die erste Kennung der gesuchten Entität (4) angewandt wird, der variable Parameter (i) mindestens einen Repräsentanten (mᵢ) der Vielzahl von Repräsentanten, die anhand der ersten Kennung erhalten werden kann, auswählt, und bei dem die Anwendung der ersten Identifikationsfunktion einen Vergleich zwischen dem von dem variablen Parameter ausgewählten Repräsentanten und mindestens einem Repräsentanten der Vielzahl von Repräsentanten, die anhand der ersten Kennung der Entität erhalten werden kann, umfasst.

8. Verfahren nach einem der vorhergehenden Ansprüche, bei dem der Wert des variablen Parameters (i), der zum Bilden des erhaltenen ersten Identifikationswortes (mᵢ) verwendet wird, zufällig oder quasi-zufällig ausgewählt wird.

9. Verfahren nach einem der vorhergehenden Ansprüche, bei dem das erhaltene erste Identifikationswort (mᵢ) über den Kommunikationskanal (2) von der Verifizierungsvorrichtung (1) aus auf mithilfe eines Fehlerkorrekturcodes codierte Weise übertragen wird.

10. Verfahren nach einem der vorhergehenden Ansprüche, bei dem der Kommunikationskanal (2) ein drahtloser Kanal wie beispielsweise ein Funkkanal ist und bei dem die Verifizierungsvorrichtung (1) ein drahtloses Identifikationslesegerät umfasst und mindestens einige der Entitäten der Menge von Entitäten (3-5) drahtlose Identifikationsmarker umfassen.

11. Verfahren nach einem der vorhergehenden Ansprüche, bei dem die Möglichkeit, die Vielzahl von Repräsentanten zu erhalten, die anhand einer Kennung erhalten werden kann, nur der Entität (3-5) der Menge von Entitäten, welche die Kennung besitzt, und der Verifizierungsvorrichtung (1) gegeben wird.

12. Verfahren nach einem der vorhergehenden Ansprüche, bei dem die erste Codierungsfunktion dazu eingerichtet ist, dass dasselbe erste Identifikationswort das Ergebnis der Anwendung der ersten Codierungsfunktion auf mehrere unterschiedliche Kennungen unter der Menge aller möglichen Kennungen sein kann.

13. Verifizierungsvorrichtung (1), die dazu eingerichtet ist, Informationen mit einer Menge von Entitäten über mindestens einen Kommunikationskanal (2) auszutauschen, wobei jede Entität der Menge von Entitäten eine erste jeweilige Kennung besitzt, anhand der eine Vielzahl von Repräsentanten erhalten werden kann, wobei die Verifizierungsvorrichtung umfasst:
- eine Einheit zum Erhalten eines ersten Identifikationswortes (mᵢ; p(xᵢ)) bezüglich einer gesuchten Entität (4), wobei die Einheit zum Erhalten geeignet ist, das erste Identifikationswort durch Anwenden einer ersten Codierungsfunktion auf die erste Kennung der gesuchten Entität zu bilden, so dass es von einem Teilbereich der Vielzahl von Repräsentanten abhängt, die anhand der ersten Kennung erhalten werden kann, wobei die Einheit zum Erhalten geeignet ist, den Teilbereich durch mindestens einen variablen Parameter (i) zu bestimmen, wobei das Identifikationswort von einem oder mehreren Repräsentanten abhängen kann, aber nicht von allen; und
- eine Einheit zum Übertragen des von der Einheit zum Erhalten erhaltenen ersten Identifikationswortes über den Kommunikationskanal.

14. Entität (3-5), die einer Menge von Entitäten angehört, die in der Lage sind, Informationen mit einer Verifizierungsvorrichtung (1) über mindestens einen Kommunikationskanal (2) auszutauschen und jeweils eine erste jeweilige Kennung besitzen, anhand der eine Vielzahl von Repräsentanten erhalten werden kann, wobei die Entität umfasst:
- eine Einheit zum Empfangen eines Identifikationswortes, das einem von der Verifizierungsvorrichtung über den Kommunikationskanal übertragenen ersten Identifikationswort (mᵢ; p(xᵢ)) entspricht, wobei das erste Identifikationswort durch Anwenden einer ersten Codierungsfunktion auf die erste Kennung einer gesuchten Entität (4) gebildet worden ist, so dass es von einem Teilbereich der Vielzahl von Repräsentanten abhängt, die anhand der ersten Kennung erhalten werden kann, wobei der Teilbereich durch mindestens einen variablen Parameter (i) bestimmt worden ist, wobei das Identifikationswort von einem oder mehreren Repräsentanten abhängen kann, aber nicht von allen; und
- eine Einheit zum Anwenden einer ersten Identifikationsfunktion, die der ersten Codierungsfunktion zugeordnet ist, auf das empfangene Identifikationswort und auf die erste Kennung der Entität und auf eine der Entität bekannte Information unter der ersten Kennung der Entität und mindestens einem Repräsentanten der Vielzahl von Repräsentanten, die anhand der ersten Kennung erhalten werden kann, um zu verifizieren, ob die Entität der gesuchten Entität entspricht.

15. System zum Suchen einer Entität (4), die einer Menge von Entitäten angehört, mithilfe einer Verifizierungsvorrichtung (1), wobei das System Mittel umfasst, die zum Ausführen eines Verfahrens nach einem der Ansprüche 1 bis 12 geeignet sind.

## Claims

1. Method for searching for an entity belonging to a set of entities using a verifier device (1), the verifier device and the entities of said set of entities exchanging information via at least one communication channel (2), each entity of said set of entities having a first respective identifier from which a plurality of representatives can be obtained, the method comprising the following steps of:
- obtaining, in the verifier device, a first identification word (mᵢ;p(xᵢ)) related to an entity sought (4), the first identification word being formed by applying a first encoding function to the first identifier of the entity sought so as to depend on a sub-portion of the plurality of representatives capable of being obtained from said first identifier, said sub-portion being determined by at least one variable parameter (i), the identification word capable of depending on one or more representatives but not on all representatives; and
- transmitting, from the verifier device, the first identification word obtained over the communication channel.

2. Method according to claim 1, further comprising the following steps, implemented by each entity (3-5) of said set of entities listening over the communication channel (2), of:
- receiving an identification word corresponding to the first identification word (mᵢ;p(xᵢ)) transmitted over the communication channel; and
- applying a first identification function associated with the first encoding function to the received identification word and to a piece of information known by said entity from among the first identifier of said entity and at least one representative of the plurality of representatives capable of being obtained from said first identifier, so as to verify whether said entity corresponds to the entity sought (4).

3. Method according to claim 2, wherein an indication of the value of the variable parameter (i) used to form the first identification word obtained (mᵢ) is transmitted from the verifier device (1) over the communication channel (2), and wherein, for each entity (3-5) of said set of entities listening over the communication channel, said application of the first identification function takes into account the indication of the value of the received variable parameter.

4. Method according to claim 2 or 3 wherein, when the result of said application of the first identification function reveals that said entity (3-5) corresponds to the entity sought (4), said entity sends a response (7; 9; 11) to the verifier device (1) via the communication channel (2).

5. Method according to claim 4, wherein said entity (3-5) has a second identifier, from which a plurality of representatives can be obtained, wherein a second identification word (Mᵢ;p(Xᵢ)) is obtained in said entity by applying a second encoding function to a piece of information known by said entity from among the second identifier of said entity and at least one representative of the plurality of representatives capable of being obtained from said second identifier so as to depend on a sub-portion of the plurality of representatives capable of being obtained from said second identifier, said sub-portion being determined by at least one variable parameter (i), and wherein the response (7; 9; 11) sent by said entity to the verifier device (1) via the communication channel (2) includes the second identification word.

6. Method according to claim 5, wherein an identification word corresponding to the second identification word (Mᵢ;p(Xᵢ)) included in said response (7; 9; 11) is received in the verifier device (1), and wherein the verifier device applies a second identification function associated with the second encoding function to the identification word received in the verifier device and to a piece of information known by the verifier device from among the second identifier of said entity (3-5) and at least one representative of the plurality of representatives capable of being obtained from said second identifier, so as to carry out a further verification of a correspondence between said entity and the entity sought.

7. Method according to any of claims 2 to 6, wherein the first encoding function is arranged such that, when it is applied to the first identifier of the entity sought (4), said variable parameter (i) selects at least one representative (mᵢ) from the plurality of representatives capable of being obtained from said first identifier, and wherein said application of the first identification function comprises a comparison between said representative selected by said variable parameter and at least one representative of the plurality of representatives capable of being obtained from the first identifier of said entity.

8. Method according to any of the preceding claims, wherein the value of the variable parameter (i) used to form the first identification word (mᵢ) obtained is chosen at random or almost at random.

9. Method according to any of the preceding claims, wherein the first identification word (mᵢ) obtained is transmitted over the communication channel (2) from the verifier device (1) in an encoded manner using an error-correcting code.

10. Method according to any of the preceding claims, wherein the communication channel (2) is a wireless channel, such as a radio channel, and wherein the verifier device (1) comprises a wireless identification reader and at least some of the entities of the set of entities (3-5) comprise wireless identification tags.

11. Method according to any of the preceding claims, wherein the ability to obtain the plurality of representatives capable of being obtained from an identifier is only given to the entity (3-5) of said set of entities having said identifier and to the verifier device (1).

12. Method according to any of the preceding claims, wherein the first encoding function is arranged such that the same first identification word can be the result of the application of the first encoding function to a plurality of different identifiers from among the set of all possible identifiers.

13. Verifier device (1) arranged so as to exchange information with a set of entities via at least one communication channel (2), each entity of said set of entities having a first respective identifier from which a plurality of representatives can be obtained, the verifier device comprising:
- a unit for obtaining a first identification word (mᵢ;p(xᵢ)) related to an entity sought (4), said obtaining unit being adapted to form the first identification word by applying a first encoding function to the first identifier of the entity sought so as to depend on a sub-portion of the plurality of representatives capable of being obtained from said first identifier, said obtaining unit being adapted to determine said sub-portion by at least one variable parameter (i), the identification word capable of depending on one or more representatives but not on all representatives; and
- a unit for transmitting, over the communication channel, the first identification word obtained by said obtaining unit.

14. Entity (3-5) belonging to a set of entities capable of exchanging information with a verifier device (1) via at least one communication channel (2) and each having a first respective identifier from which a plurality of representatives can be obtained, said entity comprising:
- a receiver unit for receiving an identification word corresponding to a first identification word (mᵢ;p(xᵢ)) transmitted over the communication channel by the verifier device, the first identification word having been formed by applying a first encoding function to the first identifier of an entity sought (4), by the verifier device, so as to depend on a sub-portion of the plurality of representatives capable of being obtained from said first identifier, said sub-portion having been determined by at least one variable parameter (i), the identification word capable of depending on one or more representatives but not on all representatives; and
- a unit for applying a first identification function associated with the first encoding function to the received identification word and to the first identifier of said entity and to a piece of information known by said entity from among the first identifier of said entity and at least one representative of the plurality of representatives capable of being obtained from said first identifier, so as to verify whether said entity corresponds to the entity sought.

15. System for searching for an entity (4) belonging to a set of entities using a verifier device (1), the system comprising means adapted to implement the method according to any of claims 1 to 12.
